# EUROPEAN PATENT SPECIFICATION

(11) **EP 3 051 568 B1**
(45) Date of publication and mention of the grant of the patent: **13.03.2019**
(21) Application number: 15153300.7
(22) Date of filing: 30.01.2015
(51) Int. Cl.: H01H 71/44, H01H 3/30, H01H 3/24, H02H 3/093

(54) **Operating mechanism for tripping a voltage circuit breaker**
Betätigungsvorrichtung zum Auslösen eines Spannungsschutzschalters
Mécanisme de déclenchement d'un disjoncteur de haute tension

(43) Date of publication of application: 03.08.2016
(73) Proprietor: General Electric Technology GmbH, 5400 Baden (CH)
(72) Inventor: Von Allmen, Peter, 5054 Kirchleerau (CH)
(74) Representative: Fischer, Michael Maria

(56) References cited:
- WO-A1-2010/102989
- US-A- 3 329 870

## Description

### Technical field and prior art

The invention relates to an operating mechanism for tripping a voltage circuit-breaker and, more particularly, to an operating mechanism for tripping a high and medium voltage circuit-breaker.

The energy to trip a voltage circuit-breaker is stored either in a spring (spring-operated mechanism) or in a hydraulic tank (hydraulic-operated mechanism). The spring is held in its charged position using a latching-system, while the hydraulic tank is kept under pressure by a closed valve. To trip the circuit-breaker, the latching-system or the valve is opened either manually or by a magnetic force created by a current flowing through a coil, the current resulting from an electric impulse applied to the coil.

For some appications, the tripping time of the circuit-breaker has to be prolonged by several milliseconds to meet the requirements of the circuit-breaker.

According to the prior art, an additional mass is attached to the latching-system of the mechanism. Due to the inertia of the additional mass, the tripping-time is delayed.

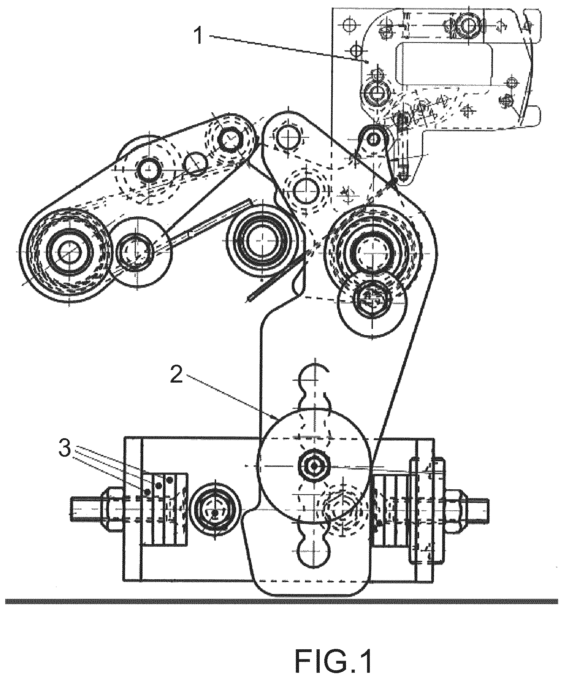

The Figure 1 shows a latching-system according to the prior art. The additional mass is here a pendulum mass. The latching-system comprises a magnetic solenoid to pick up the coil 1, a pendulum mass 2 and a damper for pendulum 3.

Such a mechanism has several drawbacks, i.e.:
- the system is position-dependent (the pendulum must be in vertical position to operate correctly, which presupposes that the mechanism must be fixed to the circuit-breaker in this unique position);
- the pendulum needs a lot of space, enlarging therefore the size of the mechanism;
- the latching-system comprises several mechanical parts, increasing thereby the cost of the mounting and the adjusting of the system;
- the different mechanical parts which constitute the latching-system are exposed to high accelerations and vibrations so that these parts can get loose and defective;
- the time-delay of the mechanical system is depending not only on its mass but also on the force acting to its latch so that adjusting the energy of the mechanism leads to another force on the latch and thus to a change in time-delay;
- the mass of the pendulum rises quadratically to the delay time so that using acceptable mass leads to a delay time limited to about 50 milliseconds. Similar operating mechanism is known from the document US 3 329 870 A.

The operating mechanism for tripping a voltage circuit-breaker of the invention does not have such drawbacks.

### Presentation of the invention

The invention relates to an operating mechanism for tripping a a circuit-breaker according to claim 1.

The operating mechanism of the invention comprises an electronic component able to delay the electric impulse applied to the coil by the time required.

According to a preferred embodiment of the invention, the electronic component able to delay the electric impulse is integrated with the coil in a same component.

The operating mechanism of the invention has several advantages, i.e.:
- it is independent of the position of the drive,
- adjusting the energy of the mechanism does not influence the delay-time,
- the operating-mechanism of the invention has less mechanical parts than the operating-mechanism of the prior art, which is much more reliable and cost saving,
- the repeatability of a same delay-time is much more better than the one of the prior art,
- according to the preferred embodiment of the invention, there is no supplementary space needed in the mechanism because the means to delay the impulse is integrated with a coil in a same component.

### Brief description of the drawings

Other characteristics and advantages of the invention will become clearer upon reading a preferred embodiment of the invention made in reference to the attached figures, wherein:
- The Figure 1 - already described - represents an operating mechanism for tripping a voltage circuit-breaker according to the prior art;
- The Figure 2 represents a diagram of an operating mechanism for tripping a voltage circuit breaker according to the invention;
- The Figure 3 represents an example of the operating mechanism of the invention represented in Figure 2;
- The figure 4 represents an improvement of the example of operating mechanism represented in Figure 3.

In all the figures, the same references designate the same elements.

### Detailed description of the invention

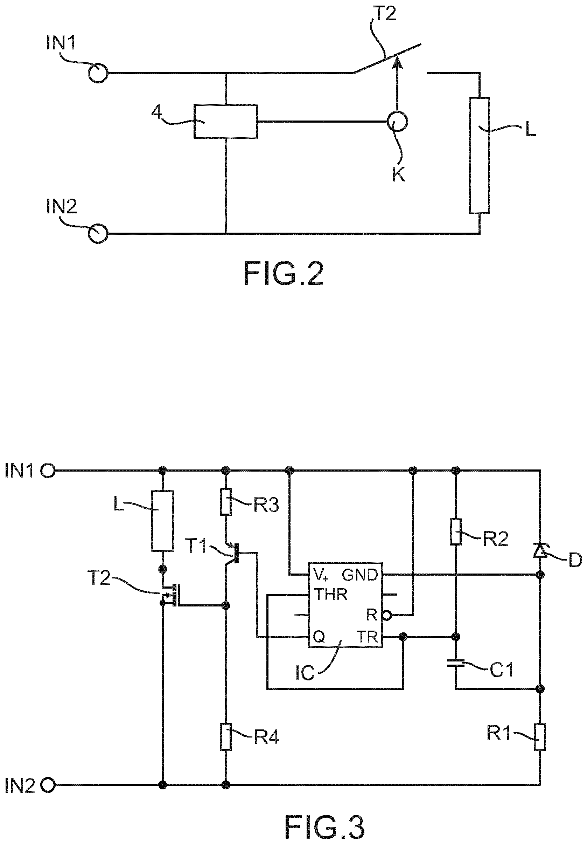

The Figure 2 represents a diagram of an operating mechanism for tripping a voltage circuit breaker according to the invention.

The operating mechanism comprises means for generating an electric impulse (not shown on the figure), means for delaying the electric impulse 4, T2 and a coil L. The means for delaying the electric impulse are a delaying circuit 4 and a switch T2.

The delaying circuit 4 has a first input terminal IN1 connected to a first output of the means for generating the electric impulse, a second input terminal IN2 connected to a second output of the means for generating the electric impulse and an output terminal K connected to the input command of the switch T2.

The coil L is in series with the switch T2. The switch T2 is OFF (open circuit) before the electric impulse is applied between the first terminal IN1 and the second terminal IN2.

When the electric impulse is applied between the terminals IN1 and IN2, the delaying circuit 4 is powered on. When powered on, the delaying circuit 4 comprises means able to output, on the output terminal K, a pulse signal after a duration equal to the time-delay required. This pulse signal switches ON the switch T2 (short circuit) so that a magnetic force is created.

The Figure 3 represents an example of the operating mechanism of the invention represented in Figure 2.

The operating mechanism comprises the resistors R1, R2, R3, R4, a timer circuit IC, a condenser C1, a diode D, a bipolar transistor T1 and the switch T2. The switch T2 is for example a field effect transistor.

The coil L is in series with the transistor T2. The transistor T1 is in series with the resistors R3 and R4, a first terminal of the resistor R3 being connected to the emitter of the transistor T1 and a first terminal of the resistor R4 being connected to the collector of the transistor T1. The collector of the transistor T1 is connected to the gate of the transistor T2, which gate is the input command of the switch. The second terminal of the resistance R3 is connected to a first terminal of the coil L, the second terminal of which is connected to a first terminal of the switch T2, the second terminal of which is connected to the second terminal of the resistor R4. A first terminal of the resistor R2 is connected to a first terminal of the condenser C1, the second terminal of which is connected to a first terminal of the resistor R1. The second terminal of the resistor R2 is connected to the second terminal of the resistor R3 and the second terminal of the condencser C1 is connected to the second terminal of the resistor R4. The first terminal of the resistor R1 is also connected to a first terminal of the diode D1, the second terminal of which is connected to the second terminal of the resistor R2. The diode D and the resistor R1 are connected to the timer circuit IC so as to stabilize the supply-voltage of the timer circuit.

The main elements allowing to delay the electric impulse are the timer circuit IC, the condenser C1 and the resistor R2. The first terminal of the condenser C1 is connected to an input TR of the timer-circuit IC. The gate of the transistor T1 is connected to an output Q of the timer circuit IC.

When the electrical impulse is applied between the terminals IN1 and IN2, the timer circuit IC is powered on and, as long as the voltage at the input TR of the timer circuit is lower than a trigger-level, the output Q of the timer circuit IC stays at a logical level "high", keeping the transistor T1 closed. As soon as the trigger-level is reached at the input TR, the output Q turns to a logical level "low", opening thereby the transistor T1. Thus, the gate of the transistor T2 gets charged and the transistor T2 conducts. The coil L is therefore supplied. The transistor T1, together with the resistors R3 and R4 are to drive the transistor T2 from the logical signal output by the timer cicuit IC.

It is therefore possible to set the time delay when an electric impulse is applied between the terminals of the coil.

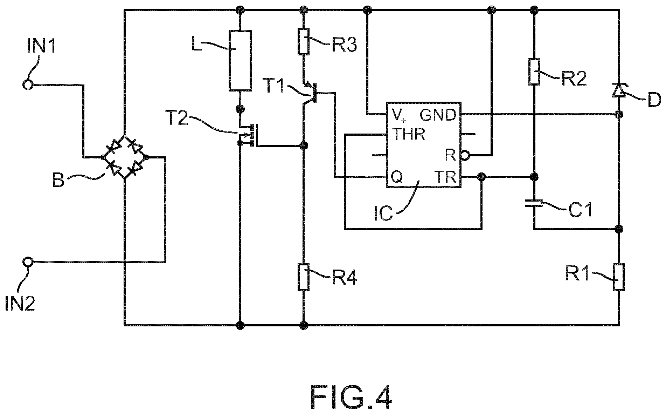

The figure 4 represents an improvement of the example of means represented in Figure 3.

In addition to the elements represented in figure 3, the operating mechanism represented in Figure 4 comprises a rectifier B placed between the terminals IN1 and IN2. This rectifier makes advantageously the circuit independent of polarity and suitable for active current AC and direct current DC.

## Claims

1. Operating mechanism for tripping a circuit-breaker, the operating mechanism comprising a coil (L) having a first terminal and a second terminal, means for generating a first electric impulse, and means for creating, from the first electric impulse, a second electric impulse delayed from the first electric impulse and applied between the first terminal and the second terminal of the coil, **characterised in that** the means for creating the second electric impulse comprise a switch (T2) connected in series with the coil (L) and a delaying circuit (4) having a first input (IN1) connected to a first output of the means for generating a first electric impulse, a second input (IN2) connected to a second output of the means for generating a first electric impulse, and an output which delivers the second electric impulse as a command signal to the switch (T2), wherein the delaying circuit (4) comprises a timer circuit (IC) having an input (TR) and an output (Q), an integrating circuit (R2, C1) connected at the input (TR) of the timer circuit (IC) and a driving circuit (R3, T1, R4) connected at the output (Q) of the timer circuit, the first electric impulse being applied at terminals of the integrating circuit, **characterized in that** the delaying circuit (4) is powered on when the first electric impulse is applied between its first input (IN1) and its second input (IN2) and **in that** the logical level at the output (Q) of the timer circuit being changed from "high" to "low" as soon as the voltage at the input of the timer circuit connected to the integrating circuit reaches a trigger-level, and the driving circuit delivering the command signal to the switch (T2) as soon as the logical level at the output of the timer circuit changes when the voltage at the input of the timer circuit reaches the trigger-level.

2. Operating mechanism according to claim 1, wherein the integrating circuit comprises a condenser (C1) at the terminals of which the first electric impulse is applied and the driving circuit comprises a PNP transistor (T1) the gate of which is connected to the output of the timer circuit and the collector of which is connected to an input command of the switch (T2).

## Patentansprüche

1. Betriebsmechanismus zum Auslösen eines Schutzschalters, wobei der Betriebsmechanismus eine Spule (L), die einen ersten Anschluss und einen zweiten Anschluss aufweist, Mittel zum Erzeugen eines ersten elektrischen Impulses und Mittel zum Erstellen eines zweiten elektrischen Impulses aus dem ersten elektrischen Impuls umfasst, der von dem ersten elektrischen Impuls verzögert ist und zwischen dem ersten Anschluss und dem zweiten Anschluss der Spule angelegt wird, **dadurch gekennzeichnet, dass** die Mittel zum Erstellen des zweiten elektrischen Impulses einen mit der Spule (L) in Reihe geschalteten Schalter (T2) und eine Verzögerungsschaltung (4) umfassen, die einen ersten Eingang (IN1), der mit einem ersten Ausgang der Mittel zum Erzeugen eines ersten elektrischen Impulses angeschlossen ist, einen zweiten Eingang (IN2), der mit einem zweiten Ausgang der Mittel zum Erzeugen eines ersten elektrischen Impulses angeschlossen ist, und einen Ausgang aufweist, der den zweiten elektrischen Impuls als Befehlssignal an den Schalter (T2) liefert,
wobei die Verzögerungsschaltung (4) eine Zeitgeberschaltung (IC), die einen Eingang (TR) und einen Ausgang (Q) aufweist, eine Integratorschaltung (R2, C1), die an den Eingang (TR) der Zeitgeberschaltung (IC) angeschlossen ist und eine Treiberschaltung (R3, T1, R4) umfasst, die am Ausgang (Q) der Zeitgeberschaltung angeschlossen ist, wobei der erste elektrische Impuls an den Anschlüssen der Integratorschaltung angelegt wird, **dadurch gekennzeichnet, dass** die Verzögerungsschaltung (4) eingeschaltet wird, wenn der erste elektrische Impuls zwischen ihrem ersten Eingang (IN1) und ihrem zweiten Eingang (IN2) angelegt wird und dass der logische Pegel am Ausgang (Q) der Zeitgeberschaltung von "hoch" auf "niedrig" geändert wird, sobald die Spannung am Eingang der an die Integratorschaltung angeschlossenen Zeitgeberschaltung einen Auslösepegel erreicht und die Treiberschaltung das Befehlssignal an den Schalter (T2) liefert, sobald sich der logische Pegel am Ausgang der Zeitgeberschaltung ändert, wenn die Spannung am Eingang der Zeitgeberschaltung den Auslösepegel erreicht.

2. Betriebsmechanismus nach Anspruch 1, wobei die Integratorschaltung einen Kondensator (C1) umfasst, an dessen Anschlüssen der erste elektrische Impuls angelegt wird, und die Treiberschaltung einen PNP-Transistor (T1) umfasst, dessen Gate mit dem Ausgang der Zeitgeberschaltung angeschlossen ist und dessen Kollektor mit einem Eingangsbefehl des Schalters (T2) angeschlossen ist.

## Revendications

1. Mécanisme de fonctionnement pour le déclenchement d'un disjoncteur, le mécanisme de fonctionnement comprenant une bobine (L) ayant une première borne et une seconde borne, un moyen pour générer une première impulsion électrique et un moyen pour créer, à partir de la première impulsion électrique, une seconde impulsion électrique retardée par rapport à la première impulsion électrique et appliquée entre la première borne et la seconde borne de la bobine, **caractérisé en ce que** le moyen pour créer la seconde impulsion électrique comprennent un commutateur (T2) connecté en série avec la bobine (L) et un circuit de retardement (4) ayant une première entrée (IN1) connectée à une première sortie du moyen pour générer une première impulsion électrique, une seconde entrée (IN2) connectée à une seconde sortie du moyen pour générer une première impulsion électrique, et une sortie qui délivre la seconde impulsion électrique en tant que signal de commande au commutateur (T2),
dans lequel le circuit de retardement (4) comprend
un circuit de minuterie (IC) ayant une entrée (TR) et une sortie (Q), un circuit d'intégration (R2, C1) connecté à l'entrée (TR) du circuit de minuterie (IC) et un circuit d'attaque (R3, T1, R4) connecté à la sortie (Q) du circuit de minuterie, la première impulsion électrique étant appliquée aux bornes du circuit d'intégration, **caractérisé en ce que** le circuit de retardement (4) est mis sous tension lorsque la première impulsion électrique est appliquée entre sa première entrée (IN1) et sa seconde entrée (IN2) et **en ce que** le niveau logique à la sortie (Q) du circuit de minuterie passe de « haut » à « bas » dès que la tension à l'entrée du circuit de minuterie connectée au circuit d'intégration atteint un niveau de déclenchement, et le circuit d'attaque fournit le signal de commande au commutateur (T2) dès que le niveau logique à la sortie du circuit de minuterie change lorsque la tension à l'entrée du circuit de minuterie atteint le niveau de déclenchement.

2. Mécanisme de fonctionnement selon la revendication 1, dans lequel le circuit intégrateur comprend un condensateur (C1) aux bornes duquel est appliquée la première impulsion électrique et le circuit d'attaque comprend un transistor PNP (T1) dont la grille est connectée à la sortie du circuit de minuterie et dont le collecteur est connecté à une commande d'entrée du commutateur (T2).
